(19)

Europäisches
Patentamt
European
Patent Office
Office européen
des brevets

(11) **EP 2 624 339 A1**

(12) **EUROPEAN PATENT APPLICATION**
published in accordance with Art. 153(4) EPC

(43) Date of publication:
**07.08.2013 Bulletin 2013/32**

(21) Application number: **11829363.8**

(22) Date of filing: **30.09.2011**

(51) Int Cl.:
*H01M 4/131* (2010.01)      *H01M 4/485* (2010.01)
*H01M 10/058* (2010.01)

(86) International application number:
**PCT/JP2011/072598**

(87) International publication number:
**WO 2012/043810 (05.04.2012 Gazette 2012/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.10.2010 JP 2010224246**
         **01.10.2010 JP 2010224245**

(71) Applicant: **Kabushiki Kaisha Toshiba**
**Minato-ku**
**Tokyo 105-8001 (JP)**

(72) Inventors:
• **MATSUNO, Shinsuke**
**Tokyo105-8001 (JP)**
• **YAJIMA, Akira**
**Tokyo 105-8001 (JP)**

• **OTANI, Yuki**
**Tokyo 105-8001 (JP)**
• **TATEBAYASHI, Yoshinao**
**Tokyo 105-8001 (JP)**
• **ISOZAKI, Yoshiyuki**
**Tokyo 105-8001 (JP)**
• **SARUWATARI, Hidesato**
**Tokyo 105-8001 (JP)**
• **SATAKE, Hideki**
**Tokyo 105-8001 (JP)**

(74) Representative: **HOFFMANN EITLE**
**Patent- und Rechtsanwälte**
**Arabellastrasse 4**
**81925 München (DE)**

(54) **NONAQUEOUS ELECTROLYTE SECONDARY BATTERY AND METHOD FOR MANUFACTURING SAME**

(57)      A non-aqueous electrolyte secondary battery (1) is provided. A negative electrode layer in the battery includes a lithium titanium oxide, and has first region(s) (21) and a second region (22) on a surface. The first region(s) (21) is/are surrounded by the second region (22) and have a lower lithium concentration. The second region (22) has a higher lithium concentration. The negative electrode layer satisfies the formula (I): $T_2 < T_1$ (I). $T_1$ is a proportion of tetravalent titanium atoms in titanium atoms in the lithium titanium oxide comprised in the first region (21). $T_2$ is a proportion of tetravalent titanium atoms in titanium atoms in the lithium titanium oxide comprised in the second region (22).

FIG.1

EP 2 624 339 A1

**Description**

Technical Field

Embodiments of the present invention relate to a non-aqueous electrolyte secondary battery and a production method thereof.

Background Art

Recently, non-aqueous electrolyte secondary battery having a high energy density has been developed by using a lithium titanium oxide such as $Li_4Ti_5O_{12}$ as a negative electrode active material. The lithium titanium oxide has little volumetric change during charge and discharge, thus resulting in providing a very small thickness variation of the battery. In addition, when used under ordinary charge and discharge conditions, an electric potential of the negative electrode is 0.4 V (vs. Li/Li$^+$) or higher. Thus, formation of coating due to decomposition of the non-aqueous electrolyte is hard to occur. Then, the battery using the lithium titanium oxide as the negative electrode active material has excellent battery properties.

The battery using the lithium titanium oxide as the negative electrode active material is, however, easy to generate gas when the battery is stored in a high temperature environment in a low SOC condition of, for example, 50% or lower. If a large amount of gas is generated during storage, elevation of inner-battery pressure and plastic deformation of the battery may occur, and also cycle performance may be decreased due to an increase in internal resistance of the battery.

Citation List

Patent Literatures

Patent Literature 1: JP-A No. 2004-355977
Patent Literature 2: JP-A No. 2005-26145

Non Patent Literature

Non Patent Literature 1: M.Q. Snyder et al., Appl. Surface Science, 253 (2007) 9336

Summary of Invention

Technical Problem

An object is to provide a non-aqueous electrolyte secondary battery in which gas generation during storage at high temperatures and increase in internal resistance are suppressed and which has a good cycle performance, and a production method thereof.

Solution to Problem

According to one embodiment, a non-aqueous electrolyte secondary battery including a positive electrode, a negative electrode including a negative electrode layer, and a non-aqueous electrolyte is provided. The negative electrode layer in the non-aqueous electrolyte secondary battery comprises a lithium titanium oxide, and has first region(s) and a second region on a surface. The first region(s) is/are surrounded by the second region and have a lower lithium concentration. The second region has a higher lithium concentration. The negative electrode layer satisfies a relationship represented by a formula (I) described below.

$$T_2 < T_1 \qquad\qquad (I)$$

wherein $T_1$ is a proportion of tetravalent titanium atoms in titanium atoms contained in the lithium titanium oxide comprised in the first region, and $T_2$ is a proportion of tetravalent titanium atoms in titanium atoms contained in the lithium titanium oxide comprised in the second region.

According to another embodiment, a method for producing a non-aqueous electrolyte secondary battery comprising a positive electrode, a negative electrode and a non-aqueous electrolyte is provided. The negative electrode comprises a lithium titanium oxide. The lithium titanium oxide has a lithium-ion inserted potential of 0.4 V of higher (vs. Li/Li$^+$). The method comprises placing the positive electrode, the negative electrode and the non-aqueous electrolyte in a container and temporarily sealing an opening of the container to obtain a temporarily-sealed secondary battery; adjusting a state of charge (SOC) of the temporarily-sealed secondary battery to less than 20% (excluding 0%); allowing the adjusted, temporarily-sealed secondary battery to stand in an atmosphere of 50°C to 90°C; unsealing the temporarily-sealed secondary battery to exhaust gas from the container; and persistently sealing the container.

Brief Description of Drawings

FIG. 1 is a schematic view showing a non-aqueous electrolyte secondary battery according to a first embodiment;
FIG. 2 is a schematic view showing a surface of a negative electrode comprised in the battery of FIG. 1;
FIG. 3 is a schematic view showing a surface of a negative electrode in another aspect;
FIG. 4 is a schematic view showing a temporarily-sealed secondary battery in a second embodiment;
FIG. 5 is a view schematically showing an electrode group;
FIG. 6 is a schematic view showing a temporarily-sealed secondary battery in another aspect; and
FIG. 7 is a chart of an XPS measurement for a negative electrode according to Example 1.

Description of Embodiments

(First Embodiment)

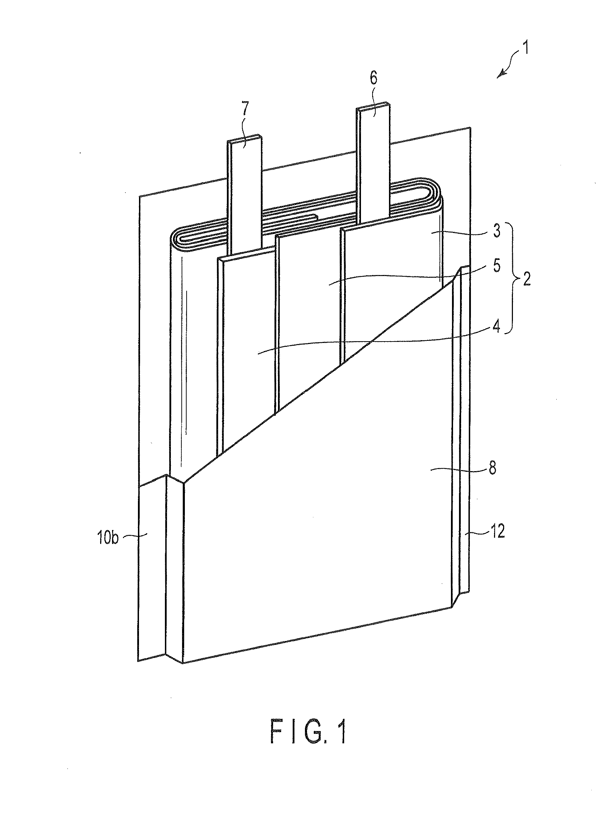

A non-aqueous electrolyte secondary battery according to a first embodiment will be explained in detail, referring to the drawings. FIG. 1 is a partially broken perspective view showing a thin non-aqueous electrolyte secondary battery 1. The battery 1 comprises a flat-type electrode group and a container. The electrode group 2 is constituted of a positive electrode 3, a negative electrode 4 and a separator 5. The positive electrode 3 and the negative electrode 4 are laminated through a separator 5 located between them. This laminate is wound into a flat shape, thereby obtaining the electrode group 2. A strip-shaped positive electrode terminal 6 is connected to the positive electrode 3. A strip-shaped negative electrode terminal 7 is connected to the negative electrode 4.

A packaging bag 8 made of laminated film is used as the container. The electrode group 2 is accommodated in the packaging bag 8. One end of each of the positive electrode terminal 6 and the negative electrode terminal 7 extends outward from an edge of the packaging bag 8. A non-aqueous electrolyte liquid (not shown) is injected into the packaging bag 8. The edge of the packaging bag 8 is heat-sealed in a state in which the positive electrode terminal 6 and the negative electrode terminal 7 are extended, whereby the packaging bag 8 is sealed. In this manner, the electrode group 2 and the non-aqueous electrolyte liquid are sealed.

The negative electrode, the positive electrode, the non-aqueous electrolyte liquid, separator, and the container will be described in detail.

(Negative Electrode)

The negative electrode comprises a negative electrode current collector and a negative electrode layer. The negative electrode layer(s) is/are formed on one side or both sides of the negative electrode current collector. The negative electrode layer comprises a negative electrode active material, a conducting agent and, optionally, a binding agent. The negative electrode active material comprises lithium titanium oxide. The negative electrode current collector is made of, for example, aluminum or aluminum alloy.

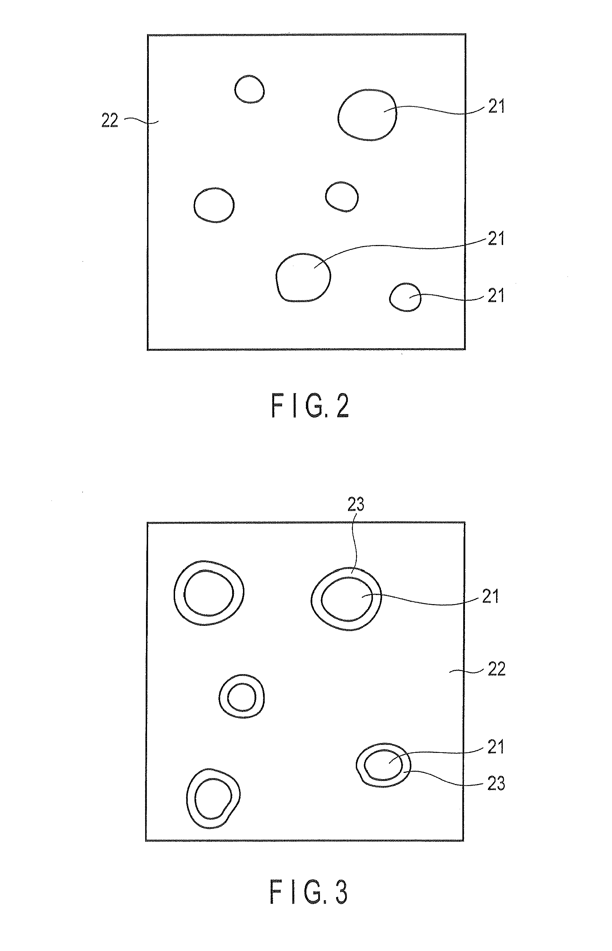

FIG. 2 schematically shows a part of the negative electrode layer. The negative electrode layer has, on its surface, a first region 21 having a lower lithium concentration and a second region 22 having a higher lithium concentration and surrounding the first region 21. The lithium concentrations of the first region 21 and the second region indicate not only the concentrations at the surface of the negative electrode layer, but also the concentrations continuing in the thickness direction of the negative electrode layer.

Here, the lithium concentration in the negative electrode layer will be explained. Lithium titanium oxide in the negative electrode exists in a state in which two phases of $Li_7Ti_5O_{12}$ and $Li_4Ti_5O_{12}$ are mixed during charging. When a state of charge (SOC) is the same, an amount of $Li_7Ti_5O_{12}$ (hereinafter referred to as an "abundance proportion of $Li_7Ti_5O_{12}$") relative to the total amount of $Li_7Ti_5O_{12}$ and $Li_4Ti_5O_{12}$ is the same anywhere on the negative electrode. For example, in a case of an SOC of 50%, the proportion of $Li_7Ti_5O_{12}$ to $Li_4Ti_5O_{12}$ is 50:50, and the abundance proportion of $Li_7Ti_5O_{12}$ is 50%.

In this embodiment, however, the negative electrode layer comprised in the battery has two or more regions having a different abundance proportion of $Li_7Ti_5O_{12}$. This state is, for example, a state in which a certain region has a proportion of $Li_7Ti_5O_{12}$ to $Li_4Ti_5O_{12}$ of 60:40 and an abundance proportion of $Li_7Ti_5O_{12}$ of 60%, and another region has a proportion of $Li_7Ti_5O_{12}$ to $Li_4Ti_5O_{12}$ of 40:60 and an abundance proportion of $Li_7Ti_5O_{12}$ of 40%.

Here, a region having a higher abundance proportion of $Li_7Ti_5O_{12}$ is referred to as a "region having a higher lithium concentration", and a region having a lower abundance proportion of $Li_7Ti_5O_{12}$ is referred to as a "region having a lower lithium concentration."

A valence of Ti in $Li_4Ti_5O_{12}$ is +4, and a valence of Ti in $Li_7Ti_5O_{12}$ is +3.4 ($Ti^{4+}$: $Ti^{3+}$ = 40:60). Thus, abundance proportion of $Li_7Ti_5O_{12}$ can be determined by measuring a valence of Ti on any region on the negative electrode layer and observing whether an amount of $Ti^{4+}$ is larger or smaller than that of $Ti^{4+}$ on other regions. Then, whether the lithium concentration is higher or lower can be determined.

That is, when the amount of $Ti^{4+}$ in any region on the negative electrode layer surface is larger than that of $Ti^{4+}$ on other regions, that region has a large amount of $Li_4Ti_5O_{12}$. Such a region has a lower abundance proportion of $Li_7Ti_5O_{12}$, and that region is a "region having a lower lithium concentration." Conversely, when the amount of $Ti^{4+}$ is smaller than that in other regions, that region has a small amount of $Li_4Ti_5O_{12}$. Such a region has a higher abundance proportion of $Li_7Ti_5O_{12}$, and that region is a "region having a higher lithium concentration."

In order to compare the amounts of $Ti^{4+}$, a proportion of tetravalent titanium (T) in titanium atoms contained in the lithium titanium oxide represented in the following formula can be used. The proportion is referred to as an "abundance proportion of tetravalent titanium." In addition, $T_1$ indicates an abundance proportion of tetravalent titanium in the first region, and $T_2$ indicates an abundance proportion of tetravalent titanium in the second region.

$$T = (Ti^{4+}/Ti) \times 100$$

wherein Ti shows a total amount of titanium atom, and the titanium contained therein may have any valence, such as $Ti^{3+}$ or $Ti^{4+}$.

From the above, in the embodiment, the first region 21 having a lower lithium concentration and the second region 22 having a higher lithium concentration in the negative electrode layer of the battery have a relationship satisfying the relationship represented by the following formula (I).

$$T_2 < T_1 \qquad\qquad (I)$$

The valence of Ti in the negative electrode layer can be measured using spectroscopy, such as Auger electron spectroscopy (AES) or X-ray photoelectron spectroscopy (XPS).

According to this embodiment, when the negative electrode layer comprising the lithium titanium oxide has the first region 21 having a lower lithium concentration and the second region 22 having a higher lithium concentration, an amount of gas generated can be remarkably decreased in a condition, particularly, in which a state of charge (SOC) of a battery is low.

The present inventors have confirmed that gas generation during storage of a battery continues until a negative electrode is discharged at least 95%. That is, it can be said that gas generation continues until the discharge is almost completed. The discharge reaction in the first region 21 is completed earlier than in the second region 22, because a region having a lower lithium concentration has a lower discharging capacity than a region having a higher lithium concentration. For that reason, an amount of gas generated from the first region 21 is smaller than that from the second region 22. Then, it would appear that when the first region 21 is present in the negative electrode, the amount of gas generated can be decreased totally in the whole negative electrode. In addition, the presence of the first region 21 can improve a large current performance, because a diffusion speed of lithium ions is fast in the region having a lower lithium concentration.

It would appear that a decrease in an amount of a negative electrode active material could lead to a decrease in an amount of gas generated. The gas generation, however, occurs in the vicinity of the surface in the negative electrode, and thus, when a surface area of the electrode, in other words, an area of the electrode actually facing a positive electrode is the same, the amount of the gas generated is unchanged. Consequently, even if the amount of the negative electrode active material is decreased, the effect of suppressing the gas generation cannot be obtained. When the surface area of the electrode is decreased while the amount of the negative electrode active material is unchanged, the amount of the gas generated can be decreased while the capacity is maintained, but large current performance such as a discharge rate performance and a cycle performance are remarkably deteriorated.

In this embodiment, one negative electrode layer may have at least one first region 21. That is, when negative electrode layers are formed on the both sides of the negative electrode current collector, each negative electrode layer may have at least one first region 21.

When the negative electrode layer has multiple first regions 21, the first regions 21 are preferably dispersed in the negative electrode layer. The negative electrode is a state preferably which socalled "sea-island structure". In this case, the region having a higher lithium concentration is referred to as a "sea" and the region having a lower lithium concentration is referred to as an "island".

The second region 22 having a higher lithium concentration has a slower diffusion speed of lithium ions than that of the first region 21. For that reason, when the first region 21 is not dispersed but localized, the diffusion of the lithium ions is easily localized. As a result, regions in which a charge and discharge reaction occurs on a facing positive electrode may be easily localized, thus resulting in a possibility of deterioration of a cycle performance. In addition, the localization of the diffusion of lithium ions exerts a bad influence on the discharge performance, particularly in the case that the discharge is performed at a large current. As described above, it is preferable to disperse the first regions 21 in the negative electrode layer, and it is more preferable to uniformly disperse them. When the first regions 21 are uniformly dispersed, a concentration of current can be suppressed, and therefore, the good cycle performance can be maintained while the amount of the gas generated can be suppressed.

Further preferably, the negative electrode layer satisfies the relationship represented by the following formula (II):

$$3 \leq T_1 - T_2 \leq 30 \qquad\qquad (II)$$

When the difference $(T_1 - T_2)$ in the abundance proportion of tetravalent titanium is 3% or more, the influence of the diffusion of lithium ions from the second region 22 to the first region 21 is small, and the difference in the lithium concentration can be maintained. On the other hand, when the difference $(T_1 - T_2)$ in the abundance proportion of tetravalent titanium is 30% or less, a decrease in a negative electrode capacity can be suppressed.

The first region 21 is completely discharged upon discharge of a battery. On the other hand, it is not completely charged when the charge of the battery is completed. On the contrary, the second region 22 is not completely discharged when discharge of a battery is completed. On the other hand, it reaches a completely charged state upon the charge of the battery. The first region 21, accordingly, is not completely charged, and therefore as the difference in the lithium concentration compared to that in the second region 22 is higher, the negative electrode capacity decreases more. If the charge is forcedly continued in order to supply the decrement of the negative electrode capacity, a positive electrode potential in the battery shifts to higher potential. As a result, a side-reaction is induced between the positive electrode and the electrolyte liquid, or a crystal structure of the positive electrode active material is changed, which lowers the stability, thus resulting in a possibility of lowering the safety of the battery. The difference $(T_1 - T_2)$ in the abundance proportion of tetravalent titanium between the first region 21 and the second region 22 is, therefore, preferably 30% or less.

When the battery having the structure of this embodiment is allowed to stand at 25°C for one month, and then it is taken apart into pieces and a concentration distribution of the negative electrode is checked, a change in the concentration distribution is not observed. It is confirmed, therefore that the distribution of the first regions 21 in the negative electrode in the battery of this embodiment, and the difference $(T_1 - T_2)$ in the abundance proportion of tetravalent titanium between the first region 21 and the second region 22 can be maintained.

If the lithium concentration distribution is existed, it could be considered that the lithium ions may diffuse and the concentration distribution is decreased. In both of the first region and the second region, however, two phases of $Li_7Ti_5O_{12}$ and $Li_4Ti_5O_{12}$ exist in a mixed state, and there is no middle phase state such as $Li_5Ti_5O_{12}$. In order to dilute the concentration distribution, it is required to diffuse the lithium ions between the two kinds of crystals of $Li_7Ti_5O_{12}$ and $Li_4Ti_5O_{12}$ to cause the phase transfer reaction. A speed of the lithium diffusion in the crystals, however, is not so fast, and a speed of a phase reaction between $Li_4Ti_5O_{12}$ and $Li_7Ti_5O_{12}$ is also not so fast. It would appear, accordingly, that the phase transfer from $Li_7Ti_5O_{12}$ to $Li_4Ti_5O_{12}$ is unlikely to be brought about solely by a diffusion of lithium ions caused by the concentration distribution.

It would appear, therefore, that the lithium concentration distribution having a certain concentration difference or more could be maintained even after a charge and discharge cycle or long-term storage. In other words, the difference $(T_1 - T_2)$ in the abundance proportion of tetravalent titanium can be maintained between the first region 21 and second region 22. The difference $(T_1 - T_2)$ in the abundance proportion of tetravalent titanium, accordingly, can be measured in a battery having any SOC.

When the concentration difference is minute, it would appear that the concentration distribution becomes smaller due to the influence of slow diffusion, and finally disappears. For that reason, two regions which the difference ($T_1$-$T_2$) in the abundance proportion of tetravalent titanium is less than 3% are defined as one contiguous region.

In this embodiment, the first regions 21 have preferably an area from 0.1 mm$^2$ to 20 cm$^2$. When the first regions 21 have an area of 0.1 mm$^2$ or more, an effect of lowering an amount of gas generated can be obtained. On the other hand, when the first regions 21 have an area of 20 cm$^2$ or less, a concentration of current can be prevented in the first regions 21 or the second region 22 upon rapid charge/discharge of the battery. The first regions 21 have more preferably an area from 1 mm$^2$ to 15 cm$^2$.

The negative electrode layer has preferably at least one first region 21 every 25 cm$^2$-area of the surface of the negative electrode layer. When the negative electrode layer has at least one first region 21 every 25 cm$^2$-area of the surface of the negative electrode layer, an influence of a decrease in a lithium concentration difference between the first region 21 and the second region 22 due to diffusion of lithium ions can be suppressed, even if the battery is allowed to stand for a long time.

In another aspect, a negative electrode layer may have third regions between a first region and a second region on its surface. Such a schematic view is shown in FIG. 3. A third region 23 is located between a first region 21 and a second region 22. The third region 23 has a lithium concentration higher than that of the first region and lower than that of the second region. The lithium concentration of third region 23 preferably continuously decreases from the lithium concentration of the second region 22 to the lithium concentration of the first region, though it is not limited thereto.

The third region 23 acts as diffusion pass for lithium ions. Therefore, when a battery is charged and discharged with a large current, localization of lithium ions does not occur easily. As a result, charge/discharge performance upon charging/discharging with a large current can be further improved. In addition, the area of the diffusion pass for lithium ions can be increased by the presence of the third region 23, whereby reduction of cycle performance caused by concentration of current can be suppressed. As a result, it is possible to maintain an excellent cycle performance.

A lithium titanium oxide comprised in a negative electrode active material has preferably a lithium-ion inserted potential of 0.4 V (vs. Li/Li$^+$) or higher. Typically, lithium titanium oxides having a lithium-ion inserted potential of 0.4 V (vs. Li/Li$^+$) or higher are used as a negative electrode active material. Examples of the active material having a lithium-ion inserted potential of 0.4 V or higher (vs. Li/Li$^+$) may include lithium titanate having a spinel structure ($Li_{4+x}Ti_5O_{12}$), and lithium titanate having a ramsdellite structure ($Li_{2+x}Ti_3O_7$). The lithium titanium oxides described above may be used alone or as a mixture of two kinds or more. In addition, a titanium oxide (for example, $TiO_2$) capable of forming into a lithium titanium oxide by charge and discharge may be used as the active material. The upper limit of the lithium-ion inserted potential of the lithium titanium oxide is preferably, but not limited to, 2 V or less.

The primary particles of the lithium titanium oxide have preferably an average particle size of 5 $\mu$m or smaller, more preferably 1 $\mu$m or smaller. When the primary particles have an average particle size of 5 $\mu$m or smaller, an effective area capable of contributing to an electrode reaction is sufficient, and a good discharge performance with a large current can be obtained.

The lithium titanium oxide has preferably a specific surface area of 1 to 10 m$^2$/g. When the specific surface area is 1 m$^2$/g or more, an effective area capable of contributing to an electrode reaction is sufficient, and a good discharge performance with a large current can be obtained. On the other hand, when the specific surface area is 10 m$^2$/g or less, a reaction with a non-aqueous electrolyte can be suppressed, and lowering of a charge and discharge efficiency and gas generation during storage can be suppressed.

Carbon materials can be used as a conducting agent comprised in the negative electrode layer. The carbon materials preferably have a high storage performance of alkali metals and a high conductivity. Examples of the carbon material include acetylene black and carbon black.

Examples of the binding agent include polytetrafluoroethylene (PTFE), poly(vinylidene fluoride) (PVdF), fluorine-containing rubber, styrenebutadiene rubber (SBR), polypropylene (PP), polyethylene (PE) and carboxymethyl cellulose (CMC).

As for a mixing proportion of the negative electrode active material, the conducting agent and the binding agent, it is preferable that the proportion of the negative electrode active material is from 70 to 95% by weight, the proportion of the conducting agent is from 0 to 25% by weight, and the proportion of the binding agent is from 2 to 10% by weight.

The negative electrode can be produced by suspending the negative electrode active material, the conducting agent and the binding agent in a suitable solvent to prepare a slurry; coating the resulting slurry on one side or both sides of a current collector; and drying it.

(Positive Electrode)

The positive electrode comprises a positive electrode current collector and a positive electrode layer. The positive electrode layer(s) is/are formed on one side or both sides of the positive electrode current collector. The positive electrode layer comprises a positive electrode active material, and optionally a conducting agent and a binding agent. The positive electrode current collector is formed from, for example, aluminum or aluminum alloy.

Various oxides and sulfides may be used as the positive electrode active material. Examples of the positive electrode active material include manganese dioxide ($MnO_2$), iron oxide, copper oxide, nickel oxide, lithium-manganese composite oxide, (for example, $Li_xMn_2O_4$ or $Li_xMnO_2$), lithium-nickel composite oxide (for example, $Li_xNiO_2$), lithium-cobalt composite oxide ($Li_xCoO_2$), lithium-nickel-cobalt composite oxide (for example, $LiNi_{1-y}Co_yO_2$), lithium-manganese-cobalt composite oxide ($Li_xMn_yCo_{1-y}O_2$), lithium-manganese-nickel composite oxide having a spinel structure ($Li_xMn_{2-y}Ni_yO_4$), lithium phosphorus oxide having an olivine structure ($Li_xFePO_4$, $Li_xFe_{1-y}Mn_yPO_4$, $Li_xCoPO_4$, and the like), lithium iron phosphate ($LiFePO_4$), lithium-composite phosphate compound (for example, $LiMn_xFe_{1-x}PO_4$), iron sulfate ($Fe_2(SO_4)_3$), and vanadium oxide (for example, $V_2O_5$). The values of x and y in the examples described above are each preferably within a range of 0 to 1.

Organic materials or inorganic materials such as conductive polymer materials such as polyaniline or polypyrrole, disulfide-based polymer materials, sulfur (S), fluorinated carbon may be also used as the positive electrode active material.

Compounds having a high battery voltage are preferably used as the positive electrode active material. For example, lithium-manganese composite oxide ($Li_xMn_2O_4$), lithium-nickel composite oxide ($Li_xNiO_2$), lithium-cobalt composite oxide ($Li_xCoO_2$), lithium-nickel-cobalt composite oxide ($LiNi_{1-y}Co_yO_2$), lithium-manganese-cobalt composite oxide ($Li_xMn_yCo_{1-y}O_2$), lithium-manganese-nickel composite oxide having a spinel structure ($Li_xMn_{2-y}Ni_yO_4$), lithium iron phosphate ($Li_xFePO_4$) are preferably used. The values of x and y in the examples described above are each preferably within a range of 0 to 1.

Examples of the conducting agent include acetylene black, carbon black, and graphite.

Examples of the binding agent include polytetrafluoroethylene (PTFE), poly(vinylidene fluoride) (PVdF), fluorine-containing rubber, ethylene-butadiene rubber (SBR), polypropylene (PP), polyethylene (PE), and carboxymethyl cellulose (CMC).

The active material, the conducting agent and the binding agent are preferably mixed in the proportion from 80 to 95% by weight, from 3 to 20% by weight, and from 2 to 7% by weight, respectively.

The positive electrode active material, the conducting agent and the binding agent are preferably mixed in the proportion from 80 to 95% by weight, from 3 to 18% by weight, and from 2 to 7% by weight, respectively.

The positive electrode can be produced by suspending the positive electrode active material, the conducting agent and the binding agent in a suitable solvent to prepare a slurry; coating the resulting slurry on one side or both sides of a current collector; and drying it.

(Non-aqueous Electrolyte)

Liquid non-aqueous electrolytes (non-aqueous electrolyte liquid), polymer gel electrolytes, polymer solid electrolytes and/or inorganic solid electrolytes having lithium ion conductivity may be used as a non-aqueous electrolyte. The liquid non-aqueous electrolyte (non-aqueous electrolyte liquid) may be prepared, for example, by dissolving an electrolyte in a non-aqueous solvent. The polymer gel electrolyte may be prepared, for example, by mixing a polymer material, a non-aqueous solvent and an electrolyte. The solid electrolyte may be prepared, for example, by dissolving an electrolyte in a polymer material and solidifying the mixture.

Any non-aqueous solvents known to be used in lithium battery may be used as the non-aqueous solvent. Examples of the non-aqueous solvent include cyclic carbonates such as ethylene carbonate (EC) and propylene carbonate (PC), and mixed solvents of a cyclic carbonate and a non-aqueous solvent having a viscosity lower than that of the cyclic carbonate (hereinafter referred to as the "second solvent").

Examples of the second solvent include linear carbonates such as dimethyl carbonate, methyl ethyl carbonate and diethyl carbonate; γ-butyrolactone, acetonitrile, methyl propionate, ethyl propionate; cyclic ethers such as tetrahydrofuran or 2-methyl tetorahydrofuran; and linear ethers such as dimethoxyethane or diethoxyethane.

Alkali salts may be used as the electrolyte. Lithium salts are preferably used. Examples of the lithium salt include lithium hexafluorophosphate ($LiPF_6$), lithium tetrafluoroborate ($LiBF_4$), lithium arsenic hexafluoride ($LiAsF_6$), lithium perchlorate ($LiClO_4$), and lithium trifluoro-meta-sulfonate ($LiCF_3SO_3$). They may be used alone or as a mixture of two or more kinds thereof. Typically, lithium hexafluorophosphate ($LiPF_6$), lithium tetrafluoroborate ($LiBF_4$) or the mixture thereof is used.

A concentration of the electrolyte in the non-aqueous solvent is preferably from 0.5 to 2.5 mol/L. When the concentration is 0.5 mol/L or more, a resistance of the electrolyte is reduced and discharge performance with a large current at a low temperature can be improved. On the other hand, when it is 2.5 mol/L or less, the elevation of the melting point of the electrolyte is suppressed and the electrolyte can be in the state of a liquid at an ordinary temperature.

Polymers of a monomer, for example, polyacrylonitrile, polyacrylate, poly(vinylidene fluoride) (PVdF), and poly(ethylene oxide) (PECO), or copolymers thereof with another monomer may be used as a polymer material for forming the polymer gel electrolyte.

Polymers of a monomer, for example, polyacrylonitrile, poly(vinylidene fluoride) (PVdF), and poly(ethylene oxide) (PEO), or copolymers thereof with another monomer may be used as a polymer material for forming the solid electrolyte.

Lithium-containing ceramic materials may be used as a inorganic solid electrolyte. $Li_3N$ and $Li_3PO_4$-$Li_2S$-$SiS_2$ glass are preferably used.

(Separator)

The separator is located between the positive electrode and the negative electrode, and prevents the contact of the positive electrode with the negative electrode. The separator is made of an insulating material. In addition, the separator has a shape capable of causing movement of the electrolyte between the positive electrode and the negative electrode.

Examples of the separator include non-woven fabric made of synthetic resin, porous polyethylene film, porous polypropylene film, and cellulose based separators.

A gel or solid non-aqueous electrolyte layer may be used together with the separator described above. Instead of the separator described above, it is also possible to use the gel or solid non-aqueous electrolyte layer.

(Container)

Laminate films may be used as the container. Metal containers cause plastic deformation when the containers are expanded by gas generation, but the laminate films do not cause such a plastic deformation and therefore they are preferably used.

A multilayer film formed from a metal foil coated with a resin film is used for the laminate film. Polymers such as polypropylene (PP), polyethylene (PE), nylon and polyethylene terephthalate (PET) may be used as the resin forming the resin film. The inner surface of the laminate film container is formed from a thermoplastic resin such as PP or PE.

The laminate film has preferably a thickness of 0.2 mm or less.

According to the embodiments described above, the non-aqueous electrolyte secondary battery in which the generation of the gas during storage at a high temperature and increase in impedance are suppressed and which has a good cycle performance can be provided.

(Second Embodiment)

Next, a method for producing the non-aqueous electrolyte secondary battery of this embodiment will be explained. The method comprises placing the positive electrode, the negative electrode and the non-aqueous electrolyte in a container and temporarily sealing an opening of the container to obtain a temporarily-sealed secondary battery; adjusting a state of charge (SOC) of the temporarily-sealed secondary battery to less than 100% (excluding 0%); allowing the adjusted, temporarily-sealed secondary battery to stand in an atmosphere of 35°C to 90°C; unsealing the temporarily-sealed secondary battery to exhaust gas from the container; and persistently sealing the container.

When gas is released from a negative electrode and is exhausted upon a production of a battery, non-aqueous electrolyte secondary battery in which the generation of gas during storage at a high temperature is suppressed can be produced.

The treatment in which a battery having an SOC adjusted to a desired value is stored is referred to as an "aging treatment." When the aging treatment is performed in the process of the battery production, it is possible to intentionally generate gas from a negative electrode. At this time, in a state in which an electric potential is not applied to the negative electrode, for example a state in which the electric potential of the negative electrode does not reach 1.55 V (vs. $Li/Li^+$) which is a lithium-ion inserted/released potential of lithium titanium oxide, the gas generation reaction does not advance in the negative electrode. For that reason, the SOC is adjusted to a value above 0%.

The gas generation reaction does not advance in the same manner over the whole region of the negative electrode, and the gas is non-uniformly generated thereon. This is because if the reaction occurs at an arbitrary place, the same reactions tend to intensively occur in the vicinity of such place. In particular, the negative electrode usually has protrusions and depressions in the micron order, and therefore the reaction hardly advances uniformly on the surface of the negative electrode.

The gas generation reaction needs to be supplied with electron from the negative electrode, and therefore, a self-discharge reaction of the negative electrode advances as the gas generation advances. For that reason, a lithium concentration is decreased in the region in which the gas generation reaction has occurred, whereby the first region is formed.

The formation of the first region can be controlled by adjusting a temperature of the aging treatment, an SOC during storage, and a storage time.

The method for producing the battery according to this embodiment will be explained.

(First Step)

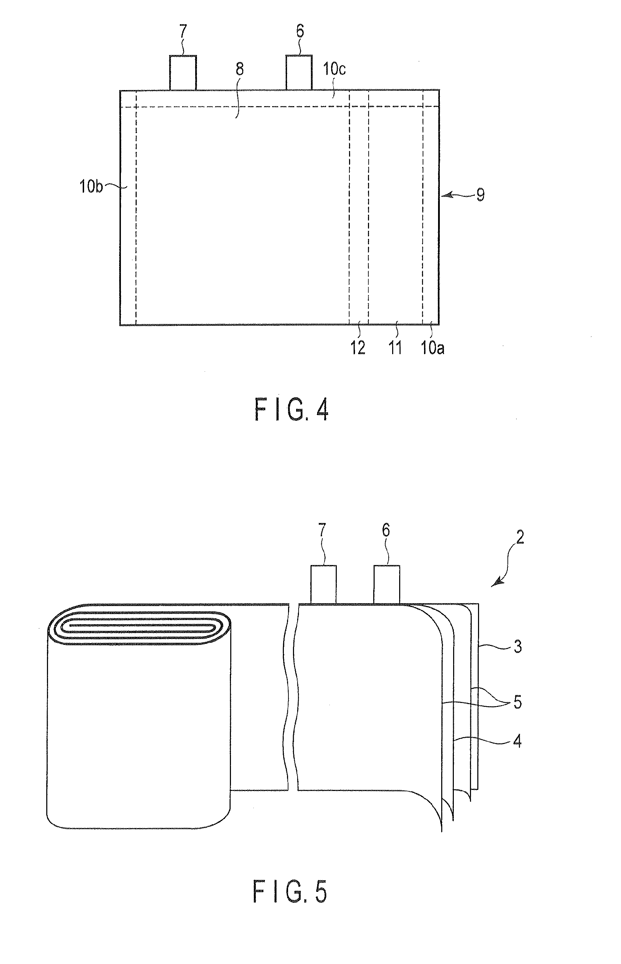

In the first step, a temporarily-sealed secondary battery as shown in FIG. 4 is produced. First, an electrode group is placed in a container 8 formed from a laminate film.

The electrode group comprises a positive electrode, a negative electrode and separators. As shown in FIG. 5, a positive electrode 3, a separator 5, a negative electrode 4 and a separator 5 are laminated in this order to form a laminate. This laminate is wound into a flat shape, whereby a flat-type electrode group 2 is formed.

A strip-shaped positive electrode terminal 6 is connected to the positive electrode 3. A strip-shaped negative electrode terminal 7 is connected to the negative electrode 4. The positive and negative electrode terminals may be united with the positive and negative electrode current collectors, respectively. The terminal, which has been formed separately from the current collector, may also be connected to the current collector. The positive and negative electrode terminals may be connected to the positive and negative electrodes respectively prior to the winding of the laminate, or the connection may be performed after the winding of the laminate.

The container 8 is formed by forming a cup-shaped part for putting the electrode group by protruding the laminate film from a thermoplastic resin film side or deep drawing the laminate film, and then folding the thermoplastic resin film inward 180° to form a lid.

The electrode group 2 is placed in the part for putting the electrode group of the container 8, and the positive and negative electrode terminals are extended outward from the container. Then, an upper edge of the container 8 from which the positive and negative electrode terminals are extended is heat-sealed. Also one edge perpendicular to the upper edge is heat-sealed. Thus, sealed areas 10b and 10c are formed. In this manner, a container 8 with one edge is opened as an opening 9 is formed.

Next, a non-aqueous electrolyte is injected from the opening 9, and the electrode group is impregnated with the non-aqueous electrolyte. Here, in order to promote the impregnation of the electrolyte liquid, the battery may be stored in the state that a pressure is applied to the battery in a thickness direction.

After that, the opening 9 is heat-sealed to form a temporarily sealed area 10a, whereby a temporarily-sealed secondary battery in which the electrode group and the non-aqueous electrolyte included in the electrode group are sealed is obtained.

(Second Step)

Subsequently, a second step is performed. An electric current is flown between the positive electrode terminal 6 and the negative electrode terminal 7 of the temporarily-sealed secondary battery, whereby a first charge is performed so that the SOC reaches a range of less than 100% (excluding 0%). Even if the SOC is temporarily beyond a desired value, the discharge can be performed after that, whereby the SOC can be adjusted. Charge and discharge may be performed at an ordinary temperature.

A surface of lithium titanium oxide which is a negative electrode active material adsorbs water, carbon dioxide, and the like. These impurities are more easily released as gases as the negative electrode potential becomes more negative. The gas generation reaction, accordingly, can be promoted by lowering the SOC of the battery. Also, when the SOC is high and the positive electrode potential is high, gas released from the negative electrode is oxidized on the positive electrode, and is easily absorbed again, but the oxidation reaction on the positive electrode can be suppressed by lowering the SOC, whereby the gas release can be promoted. In a condition in which the SOC of the negative electrode is 0%, gas is not released from the negative electrode, even if it is stored at a high temperature. The SOC is preferably adjusted to a range of 0.5% or more and less than 20%.

In this embodiment, the term "state of charge (SOC)" refers to a ratio of a charging capacity to a full charging capacity of a single battery. The full charging capacity may be an official capacity of the single battery.

(Third Step)

Next, the temporarily-sealed secondary battery, whose SOC has been adjusted to less than 100% in the second step, is allowed to stand in an atmosphere of 35°C to 90°C. At this time, water and carbon dioxide adsorbing mainly to the negative electrode layer are released as gases from the electrode group, and they remain in the container 8.

When the atmospheric temperature is too low, gas may be sometimes insufficiently released from the electrode group. On the other hand, when the atmospheric temperature is too high, the reaction of the non-aqueous electrolyte easily occurs on the surfaces of the positive electrode and the negative electrode. As a result, impedance may be increased owing to a forming of coating, or a discharging capacity of the secondary battery may be reduced. The atmospheric temperature is preferably within a range of 45° to 85°C, more preferably 50° to 85°C.

The temporarily-sealed secondary battery may be allowed to stand in the atmosphere having the temperature range described above during the time that gas is released from the negative electrode sufficiently. The time can be, for example, 1 to 50 hours, and it is preferably from 10 to 40 hours, but the time is not limited thereto.

(Fourth Step)

Next, a part of the container 8 is cut or a hole is made in the member to exhaust the gas remaining in the container 8 since the second step. For example, a laminate film is cut at any part of an unsealed area 11 which is located inside the temporarily sealed area 10a and is not heat-sealed, thereby the container 8 can be opened. It is preferable to open the member under a reduced pressure in an inert atmosphere or in a dried air.

After opening the container 8, the non-aqueous electrolyte secondary battery may be allowed to stand in a reduced atmosphere using a decompression chamber. Alternatively, gas may be aspirated from the container 8 through the opening or hole of the container 8 using an aspiration nozzle. According to these methods, the gas in the container 8 can be more certainly exhausted.

After the gas is exhausted, the container 8 is heat-sealed at the inside of the cut part of the unsealed area 11 to form a permanently sealed area 12, whereby the electrode group and the non-aqueous electrolyte are sealed again. Further, the unsealed area 11 is cut at the outside of the permanently sealed area 12. In this manner, a non-aqueous electrolyte secondary battery can be obtained. At this time, the sealing is preferably performed under a reduced pressure. Alternatively, the hole on the container 8 may be pasted with an adhesive tape or the like to seal the member. The thus obtained non-aqueous electrolyte secondary battery may be optionally charged and discharged once or more.

According to the steps described above, such a non-aqueous electrolyte secondary battery shown in FIG. 1 can be produced.

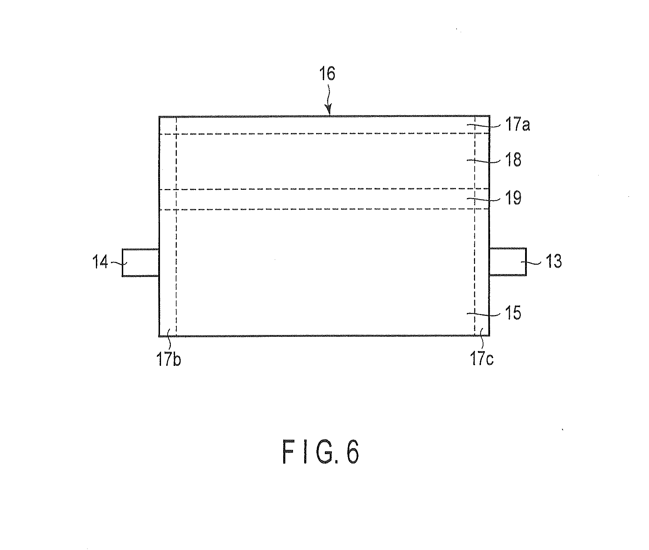

FIG. 6 is a schematic view showing another aspect of the temporarily-sealed secondary battery. When such a temporarily-sealed secondary battery is used, a non-aqueous electrolyte secondary battery in which a positive electrode terminal and a negative electrode terminal extend from different edges can be produced.

For example, in the first step, an electrode group is placed in a packaging bag 15 with a positive electrode terminal 13 and a negative electrode terminal 14 are extended from opposing edges of the packaging bag 15. Each edge from which the positive and negative electrode terminals 13 and 14 are extended is heat-sealed, thereby sealed areas 17c and 17b are formed. Subsequently, a non-aqueous electrolyte is injected from an opening 16 and the electrode group is impregnated with the electrolyte. Thereafter, a temporarily sealed area 17a is heat-sealed to obtain a temporarily-sealed secondary battery in which the electrode group and the non-aqueous electrolyte included in the electrode group are sealed.

In the fourth step, the laminate film is cut at any position in an unsealed area 18 which is located inside the temporarily sealed area 17a and is not heat-sealed, thereby the packaging bag 15 is opened.

After an internal gas is exhausted, the packaging bag 15 is heat-sealed at a position inside the cut part of the unsealed area 18 to form a permanently sealed area 19, whereby the electrode group and the non-aqueous electrolyte are sealed again. Thereafter, the unsealed area 18 is cut outside the permanently sealed area 19. In this manner, a non-aqueous electrolyte secondary battery can be obtained.

It is considered that impurities contained in the negative electrode active material is due to the gas generation during storage of a battery. The lithium titanium oxide having a lithium-ion inserted potential of 0.4 V or higher (vs. Li/Li$^+$) may adsorbed a slight amount of moisture. In the case using such a lithium titanium oxide, it would appear that the gas generation is caused by decomposing the moisture. According to the steps in the embodiment, however, the gas released from the negative electrode can be previously exhausted, and it is possible to suppress the gas generation after the non-aqueous electrolyte battery is produced, whereby swelling of the battery can be suppressed. In addition, according to the embodiment, deterioration of the electrode and the separator hardly occurs, and it is possible to suppress the increase of the impedance.

In addition, when primary particles of the lithium titanium oxide have an average particle size of 5 $\mu$m or smaller, particularly 1 $\mu$m or smaller and a specific surface area of 1 $m^2$/g or more and 10 $m^2$/g or less, the method of this embodiment can be more effective, due to a large surface area and a large amount of adsorption water.

The non-aqueous electrolyte secondary battery produced according to the embodiment has preferably a positive electrode potential of 4.5 V (vs. Li/Li$^+$) or lower, when the battery is charged to reach an SOC of 100%.

When gas is released from the negative electrode, self-discharge occurs in the negative electrode. Then, an electric potential (difference in SOC) is generated between the negative electrode and the positive electrode. This difference in SOC can be maintained when a finished battery is charged. For that reason, even if the positive electrode potential is 4.5 V or less in the second step, an electric potential is generated between the positive and negative electrodes by gas generation in the third step, and the positive electrode potential of the battery may sometimes be over 4.5 V when the battery is charged after that. If the positive electrode potential is too high, the positive electrode is easily deteriorated, and therefore the positive electrode potential in the non-aqueous electrolyte secondary battery is preferably 4.5 V (vs. Li/Li$^+$) or less when the battery is charged to reach an SOC of 100%.

In a battery having an SOC of 100%, the higher the positive electrode potential, the larger the amount of the gas generated. For that reason, the positive electrode potential is preferably 4.5 V (vs. Li/Li$^+$) or less when the battery is charged to reach an SOC of 100%.

According to the embodiments described above, the non-aqueous electrolyte secondary battery in which the generation of the gas during storage at a high temperature and increase in impedance are suppressed and which has s good cycle performance can be produced.

[Example]

(Example 1)

<Production of Positive Electrode>

91% by weight of a lithium nickel cobalt oxide (LiNi$_{0.8}$Co$_{0.2}$O$_2$) powder as a positive electrode active material, 2.5% by weight of acetylene black, 3% by weight of graphite, and 3.5% by weight of poly(vinylidene fluoride) (PVdF) were added to N-methyl pyrrolidone and mixed to prepare a slurry. This slurry was coated on both sides of a current collector made of an aluminum foil having a thickness of 15 $\mu$m, and it was dried and pressed to produce a positive electrode having a positive electrode layer with a density of 3.0 g/cm$^3$.

<Production of Negative Electrode>

85% by weight of a spinel type lithium titanium oxide (Li$_4$Ti$_5$O$_{12}$) powder having a lithium inserted potential of 1.55 V (vs. Li/Li$^+$) as a negative electrode active material, 5% by weight of graphite, 3% by weight of acetylene black, and 7% by weight of PVdF were added to NMP and mixed to prepare a slurry. This slurry was coated on both sides of a current collector made of an aluminum foil having a thickness of 11 $\mu$m, and it was dried and pressed to produce a negative electrode having a negative electrode layer with a density of 2.0 g/cm$^3$.

<Production of Electrode group>

The positive electrode as produced above, a separate or made of a porous polyethylene film having a thickness of 20 $\mu$m, the negative electrode as produced above and the separator were laminated in this order, and then the laminate was wound so that the negative electrode was located as the outermost layer to produce a electrode group. The resulting product was heat-pressed at 90°C to produce a electrode group in a flat state having a width of 58 mm, a height of 95 mm and a thickness of 3.0 mm. The electrode group thus obtained was placed in a container made of a laminate film having a thickness of 0.1 mm. The laminate film had an aluminum foil with a thickness of 40 $\mu$m and polypropylene layers formed on both sides of the aluminum foil. Then, the resulting product was dried in a vacuum at 80°C for 24 hours.

<Preparation of Non-Aqueous Electrolyte Liquid>

Ethylene carbonate (EC) and methyl ethyl carbonate (MEC) were mixed in a volume ratio of 1:2 to prepare a mixed solvent. Lithium hexafluorophosphate (LiPF$_6$) was dissolved in the mixed solvent in a concentration of 1.0 mol/L to prepare a non-aqueous electrolyte liquid.

<Production of Battery>

A temporarily-sealed secondary battery having a structure as shown in FIG. 4 was produced by using the electrode group and the non-aqueous electrolyte liquid. The temporarily-sealed secondary battery was charged at a 0.2C rate in an environment of 25°C at 2.8 V, and than it was discharged at a 0.2C rate until the voltage reached 1.5 V. After that, the battery was charged at a 1C rate so that the SOC reached 50%, and it was stored in an environment of 70°C for 12 hours (aging treatment). Subsequently, the container was unsealed at an unsealed area to exhaust gas from the battery. Then, the container was heat-sealed at a second sealed area. Subsequently, the outside thereof was cut to produce a non-aqueous electrolyte secondary battery having a capacity of 3.0 Ah as a design value.

(Comparative Examples 2 to 10)

A non-aqueous electrolyte secondary battery was produced in the same manner as in Example 1 except that the aging treatment was performed under conditions described in Table 1.

(Comparative Example 1)

A non-aqueous electrolyte secondary battery was produced in the same manner as in Example 1 except that the aging treatment was not performed.

<Measurement of Capacity>

Charging and discharging of each battery according to Examples 1 to 10 and Comparative Example 1 were performed once in an environment of 25°C at a 1C rate, and a first discharging capacity was measured. The results are shown in Table 1.

<Observation of Negative Electrode Surface>

The secondary battery of Example 1 was adjusted to a condition of 2.4 V, it was taken apart in an inert atmosphere, and the negative electrode was taken out. Ten squares of 5 cm × 5 cm ($25 cm^2$) were randomly cut from the negative electrode to produce ten samples.

An abundance proportion of tetravalent titanium in an arbitrary sample ($25 cm^2$) was measured by an AES, and a region having the lowest abundance proportion of tetravalent titanium was decided as a second region. In addition, a region having a difference in abundance proportion of tetravalent titanium from the second region of 3% or more was decided as a first region. As a result, it was confirmed that all samples had at least one first region. For example, some samples were observed to have 6 first regions which were interspersed in the second region.

The first region had an area of at most $12 cm^2$, and at least $5 mm^2$.

XPS measurements were performed using 10 samples. As a result, a peak derived from Ti appeared in an energy band of 450 to 475 eV in all samples.

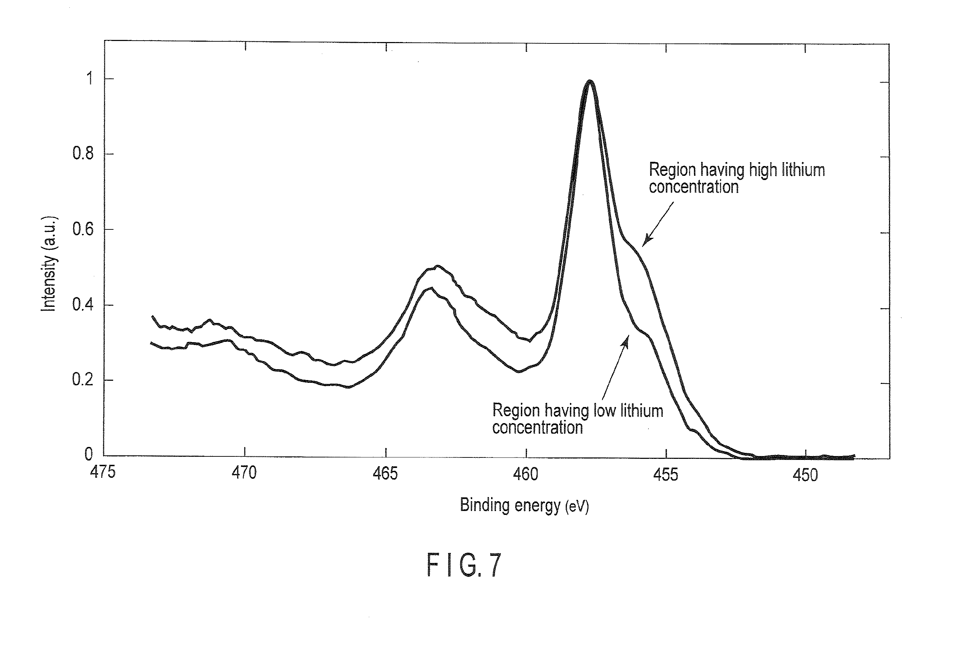

FIG. 7 shows one example of XPS measurement results of parts derived from a Ti orbital. FIG. 7 shows the results of the region (second region) having a higher lithium concentration and the region (first region) having a lower lithium concentration, which were typical examples among the samples described above. An X axis shows binding energy, a peak appearing around 456 eV is a peak belonging to $Ti^{3+}$, and a peak appearing around 458 eV is a peak belonging to $Ti^{4+}$. A Y axis was expressed by standardization based on an intensity of the peak belonging to $Ti^{4+}$. A proportion of $Ti^{4+}$ and $Ti^{3+}$ can be calculated by peak-splitting from these results.

According to the chart of FIG. 7 showing peaks, the abundance proportion $T_1$ of tetravalent titanium was 68% in the first region having a lower lithium concentration, and the abundance proportion $T_2$ of tetravalent titanium was 55% in the second region having a higher lithium concentration. In this case, accordingly, the difference ($T_1$-$T_2$) in the abundance proportion of tetravalent titanium was 13%.

In each sample, the value obtained in the region having the lowest lithium concentration was used as the abundance proportion ($T_1$) of tetravalent titanium of the lithium titanium oxides in the first region. Also, the value obtained in the region having the highest lithium concentration was used as the abundance proportion ($T_2$) of tetravalent titanium of lithium titanium oxides in the second region. Among the 10 samples in Example 1, the maximum difference ($T_1$-$T_2$) in the abundance proportion of tetravalent titanium was 21%. For Examples 2 to 10, the value of ($T_1$-$T_2$) appeared in the sample which has the maximum differences ($T_1$-$T_2$) in abundance proportion of tetravalent titanium are also shown.

When the negative electrode layer did not include the first region, there were few regions whose abundance proportion of tetravalent titanium was different from other regions in the negative electrode layer. When the aging treatment was performed as in this embodiment, however, it was confirmed that regions having different abundance proportions of tetravalent titanium were formed in the negative electrode layer. That is, it was confirmed that a lithium concentration distribution was formed by the aging treatment.

Further, valences of Ti were measured by an AES measurement, while a measuring point was shifted 1 mm by 1 mm, and abundance proportions of tetravalent titanium were measured. As a result, a continuous change in the abundance proportions of tetravalent titanium was observed. It was confirmed, therefore, that there was a third region having a lithium concentration gradient whose lithium concentration changed from the lithium concentration of the second region to the lithium concentration of the first region between the second region and the first region.

In Examples 2 to 10, and Comparative Example 1, the surfaces were observed in the same manner as above. As a result, it was confirmed that in Examples 2 to 10, first regions and third regions were interspersed in the second region, similar to Example 1. On the other hand, in Comparative Example 1, it was not confirmed that there was a lithium concentration distribution in the negative electrode layer. The results are shown in Table 1.

<Storage Test>

Thicknesses of the secondary batteries according to Examples 1 to 10 and Comparative Example 1 were measured at an SOC of 50%. After that, the SOC was adjusted to 30% at a 1C rate, and the battery was stored in an environment of 55°C for one month.

After the storage, the SOC of the battery was adjusted to 50% in an environment of 25°C at a 1C rate, and the thickness was measured. The difference in the thickness at an SOC of 50% between before and after the storage was calculated. The results are shown in Table 1.

<Cycle Test>

The same batteries as the batteries according to Examples 1 to 10 and Comparative Example 1 were separately produced, and each battery was subjected to a cycle test in an environment of 50°C in a discharging or charging range of 2.8 V-1.5 V at a 1C rate. A capacity after 500 cycles was measured, and a capacity maintenance ratio after 500 cycles was calculated, taking the initial capacity as 100%. The results are shown in Table 1.

<Results>

Table 1

| | Aging condition | First discharging capacity | Number of first regions | Maximum value of $(T_1-T_2)$ | Difference in the thickness after storage for one month (55°C) | Capacity maintenance ratio after 500 cycles |
|---|---|---|---|---|---|---|
| Example 1 | 70°C SOC 50% 12h | 2.89 Ah | 6 | 21% | + 0.33 mm | 93% |
| Example 2 | 50°C SOC 50% 24h | 2.92 Ah | 8 | 15% | + 1.48 mm | 93% |
| Example 3 | 35°C SOC 20% 15h | 2.99 Ah | 9 | 3% | + 2.36 mm | 87% |
| Example 4 | 60°C SOC 80% 3h | 2.99 Ah | 1 | 5% | + 2.02 mm | 88% |
| Example 5 | 70°C SOC 100% 24h | 2.86 Ah | 13 | 18% | + 0.65 mm | 90% |
| Example 6 | 70°C SOC 25% 48h | 2.83 Ah | 18 | 22% | + 0.20 mm | 92% |
| Example 7 | 70°C SOC 0.5% 40h | 2.82 Ah | 25 | 29% | + 0.15 mm | 90% |
| Example 8 | 55°C SOC 25% 48h | 2.90 Ah | 16 | 13% | + 1.16 mm | 91% |
| Example 9 | 50°C SOC 0.5% 72h | 2.88 Ah | 28 | 24% | + 0.23 mm | 93% |
| Example 10 | 90°C SOC 20% 12h | 2.71 Ah | 10 | 42% | + 0.12 mm | 81% |
| Comparative Example 1 | Without aging | 3.00 Ah | 0 | 0% | + 3.84 mm | 79% |

It was shown that the batteries according to Examples 1 to 10 had a thickness variation and an amount of gas generated smaller than those of the battery according to Comparative Example 1 after the storage. In addition, the batteries according to Examples 1 to 10 had a capacity maintenance ratio after 500 cycles higher than that of the battery of Comparative Example 1. It was shown, therefore, that the generation of gas was suppressed in the batteries having the structure of the embodiment during storage at a high temperature and that the batteries had a good cycle performance.

Further, the discharge capacities according to the batteries of Examples 1 to 10 were almost the same as that of the battery of Comparative Example 1. It was shown therefore that even if a battery had a first region, the discharging capacity was very few decreased. When the maximum value of $(T_1-T_2)$ was large as in Example 10, however, a tendency of reduced discharging capacity was observed.

The battery according to Comparative Example 1 had a large thickness variation after the storage and a low capacity maintenance ratio after 500 cycles. It was considered that the result was caused by generating of a large amount of gas from the negative electrode during the cycle test and accumulation of the gas in the battery.

As described above, it was shown that when an appropriate aging treatment was performed, non-aqueous electrolyte secondary battery having a suppressed gas generation during the storage and a good cycle performance could be provided.

(Example 11)

<Production of Positive Electrode>

90% by weight of a lithium cobalt oxide ($LiCoO_2$) powder as a positive electrode active material, 3% by weight of acetylene black, 3% by weight of graphite, and 4% by weight of poly(vinylidene fluoride) (PVdF) were added to N-methyl pyrrolidone (NMP) and mixed to prepare a slurry. This slurry was coated on both sides of a current collector made of an aluminum foil having a thickness of 15 $\mu$m, and it was dried and pressed to produce a positive electrode having a positive electrode layer with a density of 3.0 g/cm$^3$ and having a mass of 100 g per m$^2$ of the positive electrode layer.

<Production of Negative Electrode>

95% by weight of lithium titanium oxide ($Li_4Ti_5O_{12}$) powder having a spinel structure as a negative electrode active material, 2.5% by weight of acetylene black as a conducting agent, and 2.5% by weight of poly(vinylidene fluoride) (PVdF) were added to a N-methyl pyrrolidone (NMP) solution and mixed to prepare a slurry. This slurry was coated on both sides of a current collector made of an aluminum foil having a thickness of 15 $\mu$m, and it was dried and pressed to produce a negative electrode having a negative electrode layer with a density of 2.2 g/cm$^3$ and having a weight of 100 g per m$^2$ of the negative electrode layer. The lithium-ion inserted potential of $Li_4Ti_5O_{12}$ is 1.55 V (vs. Li/Li$^+$).

<Production of Electrode group>

The positive electrode as produced above, a separator made of a porous polyethylene film having a thickness of 20 $\mu$m, the negative electrode as produced above and the separator were laminated in this order, and then the laminate was wound so that the negative electrode was located as the outermost layer to produce a electrode group. The resulting product was heat-pressed at 90°C to produce a electrode group in a flat state having a width of 58 mm and a thickness of 3.0 mm. Thus obtained electrode group was placed in a container made of a laminate film having a thickness of 0.1 mm. The laminate film had an aluminum foil with a thickness of 40 $\mu$m and polypropylene layers formed on both sides of the aluminum foil. Then, the resulting product was dried in a vacuum at 80°C for 24 hours.

<Preparation of Non-Aqueous Electrolyte>

Lithium hexafluorophosphate ($LiPF_6$) was dissolved in a mixed solvent of ethylene carbonate (EC) and methyl ethyl carbonate (MEC) (a mixing volume ratio of 1:2) in a concentration of 1.0 mol/L to prepare a non-aqueous electrolyte.

<First Step to Fourth Step>

In the first step, the electrode group was placed in a container made of a laminate film in a state in which the positive and negative electrode terminals were extended from one side of the container. The non-aqueous electrolyte was injected into the container, and the electrode group was impregnated with the non-aqueous electrolyte. Then, the laminate film was sealed to obtain a temporarily-sealed secondary battery.

In the second step, an electric current was flown between the negative electrode terminal and the positive electrode terminal of the temporarily-sealed secondary battery, and the electrode group was charged until an SOC reached 6%.

In the third step, the temporarily-sealed secondary battery was allowed to stand at an atmospheric temperature of 70°C for 24 hours.

In the fourth step, after the above storage of the battery, a part of the laminate film of the temporarily-sealed secondary battery was cut, and it was put in a decompression chamber to exhaust gas. Then, a part of the laminate film was heat-sealed to seal the battery again.

As described above, a non-aqueous electrolyte secondary battery having a structure as shown in FIG. 1, having a width of 62 mm, a thickness of 3.2 mm and a height of 95 mm, and having a discharging capacity of 1.5 Ah.

In this non-aqueous electrolyte secondary battery, an SOC is obtained as a ratio of a charging electric capacity to a discharging capacity of 1.5 Ah. That is, when an electric capacity (a product of a current value (unit: A) and a time (unit: hour)) flown in the second step is 0.09 Ah, the SOC was $0.09/1.5 \times 100 = 6\%$ after the current was flown. When a current value during flowing varies according to a time, an electric capacity is obtained by integrating the current value for a time during which the current is flown, and the SOC was calculated as described above.

(Example 12)

A non-aqueous electrolyte secondary battery was produced in the same manner as in Example 11 except that the SOC was 1% in the second step.

(Example 13)

A non-aqueous electrolyte secondary battery was produced in the same manner as in Example 11 except that the SOC was 18% in the second step.

(Example 14)

A non-aqueous electrolyte secondary battery was produced in the same manner as in Example 11 except that the atmospheric temperature was 50°C in the third step.

(Example 15)

A non-aqueous electrolyte secondary battery was produced in the same manner as in Example 11 except that the atmospheric temperature was 80°C in the third step.

(Example 16)

A non-aqueous electrolyte secondary battery was produced in the same manner as in Example 11 except that the battery was allowed to stand in the atmosphere of the third step for 12 hours.

(Example 17)

A non-aqueous electrolyte secondary battery was produced in the same manner as in Example 11 except that the battery was allowed to stand in the atmosphere of the third step for 48 hours.

(Example 18)

A non-aqueous electrolyte secondary battery was produced in the same manner as in Example 11 except that the coating amount of the positive electrode slurry was adjusted to a weight of 95 g per $m^2$ of the positive electrode layer.

(Example 19)

A non-aqueous electrolyte secondary battery was produced in the same manner as in Example 11 except that the coating amount of the positive electrode slurry was adjusted to a weight of 90 g per $m^2$ of the positive electrode layer.

(Comparative Example 2)

A non-aqueous electrolyte secondary battery was produced in the same manner as in Example 11 except that the gas was not exhausted in the fourth step.

(Comparative Example 3)

A non-aqueous electrolyte secondary battery was produced in the same manner as in Example 11 except that the SOC was 22% in the second step.

(Comparative Example 4)

A non-aqueous electrolyte secondary battery was produced in the same manner as in Example 11 except that the atmospheric temperature was 40°C in the third step.

(Comparative Example 5)

A non-aqueous electrolyte secondary battery was produced in the same manner as in Example 11 except that the atmospheric temperature was 95°C in the third step.

(Comparative Example 6)

A non-aqueous electrolyte secondary battery was produced in the same manner as in Example 11 except that the third step was not performed.

(Comparative Example 7)

A non-aqueous electrolyte secondary battery was produced in the same manner as in Example 11 except that the second step was not performed.

(Comparative Example 8)

95% by weight of a graphitized carbon fiber as a negative electrode active material, and 5% by weight of poly (vinylidene fluoride) (PVdF) were added to an N-methyl pyrrolidone (NMP) solution and mixed to prepare a slurry. This slurry was coated on both sides of a current collector made of a copper foil having a thickness of 15 $\mu$m, and it was dried and pressed to produce a negative electrode having a negative electrode layer having a weight of 100 g per m$^2$ of the negative electrode layer. The graphitized carbon fiber has a lithium-ion inserted potential of 0.03 V (vs. Li/Li$^+$).

<Measurements>

The non-aqueous electrolyte secondary batteries according to Examples 11 to 19 and Comparative Examples 2 to 8 produced as described above were subjected to the following measurements.

(Measurement of Positive Electrode Potential)

An SOC in the non-aqueous electrolyte secondary battery was adjusted to 100%, and a part of the laminate film was cut in an argon glove box with a temperature of 25°C and a dew point of -70°C or less. A lithium reference electrode was produced by attaching a stainless steel wire as a lead to a metal lithium piece and wrapping it with a porous polyethylene film which was the same as in the separator. The lithium reference electrode was inserted to the battery. A voltage between the positive electrode terminal and the lithium reference electrode in this state is a positive electrode potential. The positive electrode potential of each battery was measured. The results are shown in Table 2.

(Measurement of Impedance)

An SOC in the non-aqueous electrolyte secondary battery was adjusted to 50%. An alternating current impedance was measured between the negative electrode terminal and the positive electrode terminal at a frequency of 1 kHz in air at a temperature of 25°C using an alternating current impedometer, which was expressed as the impedance of the non-aqueous electrolyte secondary battery. The results are shown in Table 1.

(Increase in Thickness after Storage at SOC of 25% at Temperature of 65°C)

An SOC in the non-aqueous electrolyte secondary battery was adjusted to 50%, and a thickness of the non-aqueous electrolyte secondary battery was measured in a state in which the battery was put between parallel flat panels at a cell temperature of 25°C. Then, the SOC was adjusted to 25%, and the battery was stored in a thermostat chamber having a temperature of 65°C for 100 hours. Subsequently, the SOC was adjusted to 50% again, and a thickness of the non-aqueous electrolyte secondary battery was measured in a state in which the battery was put between the parallel flat panels at a cell temperature of 25°C. The increase in the thickness was calculated from the values obtained before and after the storage. The results are shown in Table 2.

(Increase in Thickness after Storage at SOC of 100% at Temperature of 65°C)

An SOC in the non-aqueous electrolyte secondary battery was adjusted to 50%, and a thickness of the non-aqueous electrolyte secondary battery was measured in a state in which the battery was put between parallel flat panels at a cell temperature of 25°C. Then, the SOC was adjusted to 100% and the battery was stored in a thermostat chamber with a temperature of 65°C for 100 hours. Subsequently, the SOC was adjusted to 50% again, and a thickness of the non-aqueous electrolyte secondary battery was measured in a state in which the battery was put between the parallel flat panels at a cell temperature of 25°C. The increase in the thickness was calculated from the values obtained before and after the storage. The results are shown in Table 2.

Table 2

| | Lithium inserted potential of the negative electrode active material (V: vs. Li/Li$^+$) | Weight of positive electrode layer per area (m$^2$) of positive electrode (g) | SOC in the second step (%) | Atmospheric temperature in the third step (°C) | Time in the third step (hours) | Exhausting gas in the fourth step |
|---|---|---|---|---|---|---|
| Example 11 | 1.55 | 100 | 6 | 70 | 24 | With |
| Example 12 | 1.55 | 100 | 1 | 70 | 24 | With |
| Example 13 | 1.55 | 100 | 18 | 70 | 24 | With |
| Example 14 | 1.55 | 100 | 6 | 50 | 24 | With |
| Example 15 | 1.55 | 100 | 6 | 80 | 24 | With |
| Example 16 | 1.55 | 100 | 6 | 70 | 12 | With |
| Example 17 | 1.55 | 100 | 6 | 70 | 48 | With |
| Example 18 | 1.55 | 95 | 6 | 70 | 24 | With |
| Example 19 | 1.55 | 90 | 6 | 70 | 24 | With |
| Comparative Example 2 | 1.55 | 100 | 6 | 70 | 24 | Without |
| Comparative Example 3 | 1.55 | 100 | 22 | 70 | 24 | With |
| Comparative Example 4 | 1.55 | 100 | 6 | 40 | 24 | With |
| Comparative Example 5 | 1.55 | 100 | 6 | 95 | 24 | With |
| Comparative Example 6 | 1.55 | 100 | 6 | – | – | With |
| Comparative Example 7 | 1.55 | 100 | 0 | 70 | 24 | With |
| Comparative Example 8 | 0.03 | 100 | 6 | 70 | 24 | With |

(Continued)

Table 2

| | Positive electrode potential when the battery is charged to SOC of 100% (V) | Impedance at SOC of 50% (mΩ) | Increase in thickness after storage at SOC of 25% at temperature of 65°C for 100 hours (mm) | Increase in thickness after storage at SOC of 100% at temperature of 65°C (mm) |
|---|---|---|---|---|
| Example 11 | 4.48 | 6.5 | 0.20 | 0.30 |
| Example 12 | 4.48 | 6.5 | 0.21 | 0.28 |
| Example 13 | 4.48 | 6.7 | 0.18 | 0.31 |
| Example 14 | 4.47 | 6.4 | 0.37 | 0.29 |
| Example 15 | 4.50 | 6.8 | 0.17 | 0.34 |
| Example 16 | 4.47 | 6.4 | 0.27 | 0.29 |
| Example 17 | 4.49 | 6.7 | 0.18 | 0.32 |
| Example 18 | 4.50 | 6.5 | 0.20 | 0.35 |
| Example 19 | 4.53 | 6.7 | 0.19 | 0.44 |
| Comparative Example 2 | 4.48 | 6.5 | 0.60 | 0.42 |
| Comparative Example 3 | 4.48 | 7.0 | 0.17 | 0.31 |
| Comparative Example 4 | 4.45 | 6.4 | 0.44 | 0.28 |
| Comparative Example 5 | 4.52 | 7.7 | 0.16 | 0.37 |
| Comparative Example 6 | 4.44 | 6.3 | 0.78 | 0.25 |
| Comparative Example 7 | 4.44 | 6.5 | 0.85 | 0.24 |
| Comparative Example 8 | 4.46 | 4.3 | 0.23 | 0.74 |

In all of Examples 11 to 19, the increase in the thickness, which was caused by the gas generation upon the storage at a high temperature at an SOC of 25%, was small, and the impedance did not increase. In Example 19, the increase in the thickness at an SOC of 100% was larger than those of Examples 11 to 18 because the positive electrode potential was over 4.5 V when the battery was charged to reach an SOC of 100%, but the impedance did not increase, and the increase in the thickness at an SOC of 25% was small.

In Comparative Example 2 in which the fourth step was not performed, the increase in the thickness was large at an SOC of 25% and an SOC of 100%.

In Comparative Example 3 in which the SOC was 20% or more in the second step, the increase in the thickness was small when the battery was stored at an SOC of 25%, but the impedance increased. This is thought to be because the SOC is high in the second step, and a side-reaction might occur on the surface of the positive electrode.

In Comparative Example 4 in which the temperature was less than 50°C in the third step, the impedance did not increase, but the increase in the thickness was large when the battery was stored at an SOC of 25%. This is thought to be because the temperature was low during the storage, and therefore the gas release occurred insufficiently from the electrode group.

In Comparative Example 5 in which the temperature was higher than 90°C in the third step, the increase in the thickness was small when the battery was stored at an SOC of 25%, but the impedance increased. This is thought to be because the temperature was high during the storage, and therefore a coating was formed on the surface of the electrode.

In Comparative Example 6 in which the third step was not performed and Comparative Example 7 in which the second step was not performed, the increase in the thickness was remarkably large when the battery was stored at an SOC of 25%.

In Comparative Example 8 in which the lithium-ion inserted potential of the negative electrode active material was less than 0.4 V (vs. Li/Li$^+$), the increase in the thickness was not large when the battery was stored at an SOC of 25%, but it was remarkably large when the battery was stored at an SOC of 100%.

From the results described above, it was confirmed that according to the methods of this embodiment, the increase in the thickness, caused by the gas generation when the non-aqueous electrolyte secondary battery was stored at a high temperature at an SOC of 25%, could be prevented and the increase of the impedance could also be suppressed.

On the other hand, it was shown that when any of the second, the third and the fourth steps was not performed, or any of the SOC range in the second step and the temperature range in the third step was not within the range of this embodiment, the thickness was increased when the battery was stored at an SOC of 25%, or the impedance increased.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1. A non-aqueous electrolyte secondary battery **characterized by** comprising:

 a positive electrode;
 a negative electrode comprising a negative electrode layer; and
 a non-aqueous electrolyte,
 the negative electrode layer comprising a lithium titanium oxide and having first region(s) and a second region on a surface thereof, the first region(s) having a lower lithium concentration and being surrounded by the second region, the second region having a higher lithium concentration, and the negative electrode layer satisfying a relationship represented by a formula (I) described below:

$$T_2 < T_1 \qquad\qquad (I)$$

 wherein
 $T_1$ is a proportion of tetravalent titanium atoms in titanium atoms contained in the lithium titanium oxide comprised in the first region(s), and
 $T_2$ is a proportion of tetravalent titanium atoms in titanium atoms contained in the lithium titanium oxide comprised in the second region.

2. The non-aqueous electrolyte secondary battery according to claim 1, **characterized in that** a relationship represented by a formula (II) described below is satisfied:

$$3 \leq T_1 - T_2 \leq 30 \qquad (II)$$

3. The non-aqueous electrolyte secondary battery according to claim 1 or 2, **characterized in that** the first region(s) has an area in the range of 0.1 mm$^2$ to 20 cm$^2$.

4. The non-aqueous electrolyte secondary battery according to any one of claims 1 to 3, **characterized in that** one or more first regions are present in every 25 cm$^2$-area of the surface of the negative electrode layer.

5. The non-aqueous electrolyte secondary battery according to any one of claims 1 to 4, **characterized in that** the negative electrode layer further includes a third region on the surface, the third region being located between the first and second regions and having a lithium concentration higher than that of the first region(s) and lower than that of the second region.

6. A method of producing a non-aqueous electrolyte secondary battery **characterized by** comprising a positive electrode, a negative electrode and a non-aqueous electrolyte, the negative electrode comprising a lithium titanium oxide, the lithium titanium oxide causing insertion of lithium ion at a potential of 0.4 V or higher (vs. Li/Li$^+$), comprising:

    placing the positive electrode, the negative electrode and the non-aqueous electrolyte in a container and temporarily sealing an opening of the container to obtain a temporarily-sealed secondary battery;
    adjusting a state of charge (SOC) of the temporarily-sealed secondary battery to less than 100% (excluding 0%);
    thereafter, allowing the temporarily-sealed secondary battery to stand in an atmosphere of 35°C to 90°C;
    unsealing the temporarily-sealed secondary battery to exhaust gas from the container; and
    persistently sealing the container.

7. The method according to claim 6, **characterized in that** the state of charge (SOC) of the temporarily-sealed secondary battery is adjusted to less than 20% (excluding 0%).

8. The method according to claim 6 or 7, **characterized in that** the adjusted, temporarily-sealed secondary battery is allowed to stand in an atmosphere of 45°C to 85°C.

9. The method according to claim 6, **characterized in that** the positive electrode has a potential of 4.5 V or less (vs. Li/Li$^+$) when the battery is charged to reach an SOC of 100%.

10. The method according to any one of claims 6 to 9, **characterized in that** the lithium titanium oxide is selected from lithium titanate having a spinel structure and lithium titanate having a ramsdellite structure.

11. The method according to any one of claims 6 to 10, **characterized in that** primary particles of the lithium titanium oxide have an average particle size of 5 μm or less.

12. The method according to any one of claims 6 to 11, **characterized in that** the lithium titanium oxide has a specific surface area in the range of 1 m$^2$/g to 10 m$^2$/g.

FIG. 1

FIG.2

FIG.3

FIG. 4

FIG. 5

16

17a

18

19

14

13

15

17b

17c

# FIG. 6

FIG.7

<div align="center">

**INTERNATIONAL SEARCH REPORT**

</div>

| | International application No. |
|---|---|
| | PCT/JP2011/072598 |

**A.  CLASSIFICATION OF SUBJECT MATTER**
*H01M4/131*(2010.01)i, *H01M4/485*(2010.01)i, *H01M10/058*(2010.01)i

According to International Patent Classification (IPC) or to both national classification and IPC

**B.  FIELDS SEARCHED**

Minimum documentation searched (classification system followed by classification symbols)
H01M4/131, H01M4/485, H01M10/058

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| Y | JP 2002-280077 A  (Mitsubishi Cable Industries, Ltd.), 27 September 2002 (27.09.2002), claims 1, 2; paragraphs [0006] to [0013] (Family: none) | 1-12 |
| Y | JP 2008-91326 A  (GS Yuasa Corp.), 17 April 2008 (17.04.2008), paragraphs [0002] to [0019], [0023], [0037] & US 2010/0178570 A1   & WO 2008/029899 A1 | 1-12 |
| Y | JP 2009-245929 A  (Toshiba Corp.), 22 October 2009 (22.10.2009), paragraphs [0008], [0009], [0031] to [0033] & US 2010/0255352 A1   & WO 2009/113387 A1 | 1-12 |

☒  Further documents are listed in the continuation of Box C.          ☐  See patent family annex.

| | |
|---|---|
| *     Special categories of cited documents: <br> "A"   document defining the general state of the art which is not considered to be of particular relevance <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
|---|---|
| 15 December, 2011 (15.12.11) | 27 December, 2011 (27.12.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

EP 2 624 339 A1

**INTERNATIONAL SEARCH REPORT**

International application No.

PCT/JP2011/072598

| C (Continuation). | DOCUMENTS CONSIDERED TO BE RELEVANT | |
|---|---|---|
| Category* | Citation of document, with indication, where appropriate, of the relevant passages | Relevant to claim No. |
| Y | JP 2000-277144 A (Matsushita Electric Industrial Co., Ltd.), 06 October 2000 (06.10.2000), claim 1; paragraphs [0002] to [0004] (Family: none) | 1-12 |
| A | JP 2010-530122 A (Altairnano, Inc.), 02 September 2010 (02.09.2010), entire text & US 2008/0311475 A1 & WO 2008/157363 A1 | 1-12 |

Form PCT/ISA/210 (continuation of second sheet) (July 2009)

28

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004355977 A

- JP 2005026145 A

**Non-patent literature cited in the description**

- **M.Q. SNYDER et al.** *Appl. Surface Science,* 2007, 9336